# EUROPÄISCHE PATENTSCHRIFT

(11) **EP 0 620 605 B1**
(45) Veröffentlichungstag und Bekanntmachung des Hinweises auf die Patenterteilung: **30.10.1996**
(21) Anmeldenummer: 94200063.9
(22) Anmeldetag: 13.01.1994
(51) Int. Cl.: H01M 2/38

(54) **Bleiakumulator und Verwendung einer Elektrolytumwälzeinrichtung für Bleiakkumulatorenzellen**
Lead acid accumulator und use of a device for circulating electrolyte in lead accumulator cells.
Accumulateur au plomb et utilisation d'un dispositif pour la circulation de l'électrolyte dans les éléments d'un accumulateur au plomb.

(30) Priorität: 07.04.1993 DE 4311400
(43) Veröffentlichungstag der Anmeldung: 19.10.1994
(73) Patentinhaber: DETA-Akkumulatorenwerk GmbH, D-37431 Bad Lauterberg im Harz (DE)
(72) Erfinder: Fröhlich, Bernhard, D-37431 Bad Lauterberg (DE); Steffahn, Peter, D-37412 Herzberg (DE); Böller, Klaus, Dr., D-37520 Osterode (DE); Beil, Volker, D-37431 Bad Lauterberg (DE); Busch, Bernd, D-38700 Braunlage (DE); Hettwer, Joachim, D-37431 Bad Lauterberg (DE); Görg, Jürgen, D-37431 Bad Lauterberg (DE)
(74) Vertreter: Ackmann, Günther

(56) Entgegenhaltungen:
- DE-A- 2 840 089
- DE-A- 3 924 011
- DE-U- 9 211 814
- US-A- 2 584 117
- US-A- 4 693 947
- PATENT ABSTRACTS OF JAPAN vol. 005 no. 109 (E-065), 15 Juli 1981 & JP-A-56 050060 (SHIN KOBE ELECTRIC MACH CO LTD) 7.Mai 1981,

## Beschreibung

Um den Elektrolyt in den Zellen eines Bleiakkumulators zu homogenisieren und dadurch die Eigenschaften des Bleiakkumulators zu verbessern, ist eine Umwälzung des Elektrolyten bekannt. Die hierfür üblicherweise verwendete Umwälzeinrichtung besteht aus einem Luftleitrohr aus Kunststoff, dessen Durchmesser so groß ist, daß zur Anordnung zwischen der Stirnwand des Zellengefäßes und dem Plattensatz ein besonderer Raum dadurch gebildet werden muß, indem eine gesondert herzustellende positive Elektrodenplatte (Panzer platte) eingesetzt ist, die ein Röhrchen weniger hat, also entsprechend kürzer ist. Das Luftleitrohr ist durch eine im Zellendeckel in der Regel an den Stirnseiten angeordnete Diagnoseöffnung hindurchgeführt und kann entweder mit diesem durch Verkleben, Verschweißen oder durch Dichtungselemente luftdicht verbunden werden oder entsprechend DE 92 11 814 U1 mit Hilfe eines Verbindungsstücks in einem nach innen ragenden Rohrstutzen der Diagnoseöffnung abdichtend angebracht sein. Dem Anschluß an eine Druckluftleitung dient meist ein am Kopfende des Luftleitrohrs oder dem Verbindungsstück angeordnetes T-Rohr, dessen zwei in einer Achse verlaufenden Schenkel Teil einer die Zellen einer Batterie verbindenden Verteilerleitung darstellen, während der querverlaufende Schenkel mit dem Luftleitrohr verbunden ist. Um bei einer Vielzahl von Zellen, die an eine solche Verteilerleitung angeschlossen sind, eine gleich große Luftmenge durch die einzelnen Zellen durchströmen zu lassen, ist am Kopfende des Luftleitrohres bzw. an der Dekkeldurchführung in der Regel ein Drosselorgan o. dgl. angeordnet. Diese Ausführung hat zahlreiche Nachteile. Das Aussparen eines Röhrchens am Rand der positiven Elektrodenplatte beeinträchtigt die Entladekapazität. Bei der Montage ist ein sehr beschwerlicher lagerichtiger Einbau des Plattensatzes erforderlich, um das an einer bestimmten Stelle des Zellendeckels angebrachte steife Luftleitrohr einführen zu können. Hierfür sieht DE 92 11 814 U1 ein zusätzliches in der Batterie angeordnetes und mit einem Trichter versehen steifes Führungsrohr für das Luftleitrohr vor. Weiterhin bereitet die dauerhaft luftdichte Abdichtung zwischen dem querverlaufenden Schenkel des T-Rohres und dem Luftleitrohr Schwierigkeiten und erfordert in der Regel aufwendige Kontrollmaßnahmen. Schließlich ist die Anordnung eines Drosselorgans in Form einer Verengung des Durchflußquerschnittes oder eines schraubenartigen Einsatzes umständlich, sehr aufwendig und fehleranfällig.

Weiterhin ist aus JP 56-50060 A eine Elektrolytumwälzeinrichtung bekannt, bei der Belüftungsröhrchen bei der Inbetriebnahme der Bleibatterie ausschließlich zur Formation verwendet werden. Die vorgesehenen dünnen flexiblen Röhrchen werken unmittelbar bei der Montage der Batterie eingebaut, wobei sie durch die Füllöffnung für Elektrolytflüssigkeit geführt werden. Nach der Formation werden die Belüftungsröhrchen herausgezogen, und die Füllöffnung wird durch einen Stopfen verschlossen.

Demgegenüber liegt der Erfindung die Aufgabe zugrunde, die Verwendung einer Elektrolytumwälzeinrichtung für solche Bleiakkumulatorenzellen zu ermöglichen, deren Zellendeckel einen zentral angeordneten Entlüftungsstopfen und Diagnoseöffnungen aufweist, an welche sich jeweils ein nach innen ragender Rohrstutzen anschließt und die bei normalem Aufbau zwischen der Gefäßwand und dem Rand der Elektroden üblicherweise einen Zwischenraum aufweist. Außerdem soll der Einbau in übliche fertigmontierte Akkumulatorenzellen, die also keine Führungselemente für das Luftleitrohr aufweisen, möglich sein.

Diese Aufgabe wird durch die im Anspruch 1 genannten Merkmale gelöst.

Das Luftleitrohr hat im Vergleich zu der Ausführung nach DE 9211814 U1 einen so kleinen Außendurchmesser, daß es zwischen die Stirnwand des Zellengefäßes und den eingebauten Plattensatz schiebbar ist, ohne daß am Rand einer positiven Elektrodenplatte ein Röhrchen fehlt. Die Zelle weist daher ihre volle Entladekapazität auf. Das Luftleitrohr ist ohne zu knicken biegsam und, kann in eine bereits fertigmontierte Bleiakkumulatorenzelle bedarfsweise leicht durch eine der vorhandenen Diagnoseöffnungen in einen der vorhandenen Freiräume zwischen Zellenstirnwand und Plattensatz eingeschoben werden, ohne daß spezielle Anforderungen an Aufbau und Lage des Plattensatzes bestehen. Weiterhin bilden das Luftleitrohr und das T-Rohr eine Baueinheit mit einer völligen Abdichtung. Da für die Unterbringung des Luftleitrohres kein besonderer Raum geschaffen werden muß, kann die Elektrolytumwälzeinrichtung auch nachträglich bei Zellen eingesetzt werden, die nicht für diesen Zweck vorbereitet wurden.

Gegenstand der Erfindung ist weiterhin ein rust einer sohlen Elektrolytumwälzeinrichtung ausgerichteter Bleiakkumulator, wie er im Anspruch 2 definiert ist. Vorzugsweise hat das Luftleitrohr einen Außendurchmesser kleiner als 3,5 mm und beträgt der lichte Querschnitt des Luftrohres nur etwa 0,8 bis 1,0 mm, um die für eine gleichgroße Luftmenge erforderliche Drosselung zu erzielen. Der Einbau eines besonderen Drosselorgans kann daher entfallen. Ein besonders einfacher Zusammenbau läßt sich dadurch erzielen, daß der durch den Zellendeckel führende Schenkel des T-Rohrs mittels eines Dichtungsringes abdichtend in eine Diagnoseöffnung des Zellendeckels steckbar ist. Das Luftleitrohr und das T-Rohr bilden eine vorgefertigte Baueinheit, die durch einfaches Einstecken in eine Diagnoseöffnung einer Bleiakkumulatorenzelle anbringbar ist, so daß ein größerer Montageaufwand entfällt.

Der Gegenstand der Erfindung ist in der Zeichnung dargestellt; es zeigt
- Fig. 1: eine mit einer Elektrolytumwälzeinrichtung ausgerüstete Bleiakkumulatorenzelle in einem Längsschnitt,
- Fig. 2: Fig. 2 den Gegenstand der Fig. 1 in einer Draufsicht auf den Zellendeckel und
- Fig. 3: Fig. 3 das Kopfende der in Fig. 1 gezeigten Elektrolytumwälzeinrichtung in einer seitlichen Ansicht, teilweise geschnitten und in einem vergrößerten Maßstab.

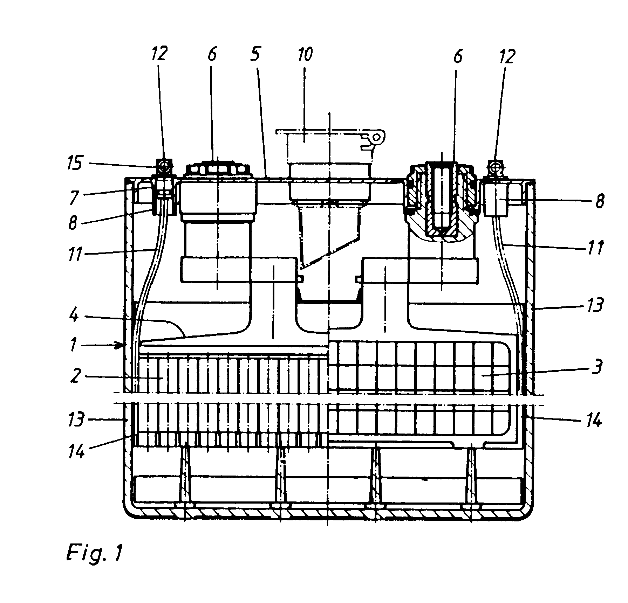

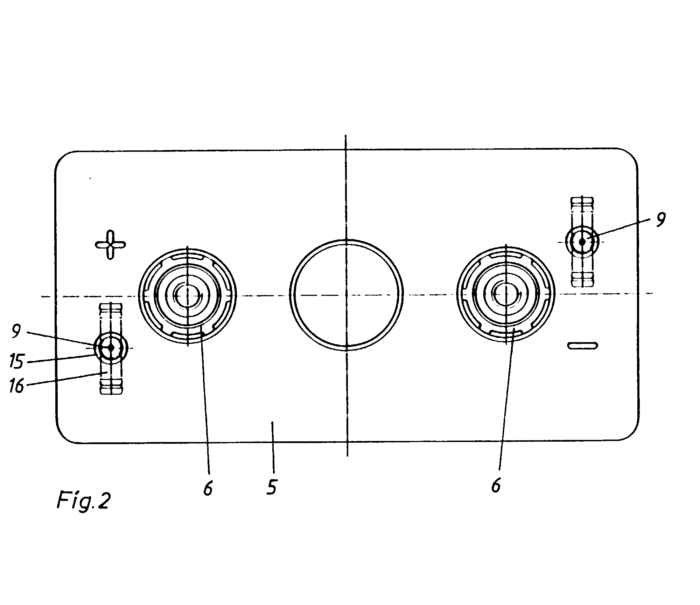

Die in Fig. 1 dargestellte Zelle eines Bleiakkumulators besteht aus einem Zellengefäß 1, in dem ein positive und negative Elektrodenplatten 2,3 aufweisender Plattensatz 4 angeordnet ist und das im Betriebszustand verdünnte Schwefelsäure als Elektrolyt enthält. Ein auf den Rand des Zellen1 angeordneter Zellendeckel 5 ist mit zwei Polanschlüssen 6 und zwei Diagnoseöffnungen 7 versehen. An die Diagnoseöffnungen 7 schließt sich ein nach innen ragender Rohrstutzen 8 an. Die Diagnoseöffnungen 7 sind zunächst durch ein beim Spritzgießen des Zellendeckels 5 angeformtes Plättchen 9 verschlossen, das bei Bedarf ausgestoßen werden kann (vgl. Fig. 2).

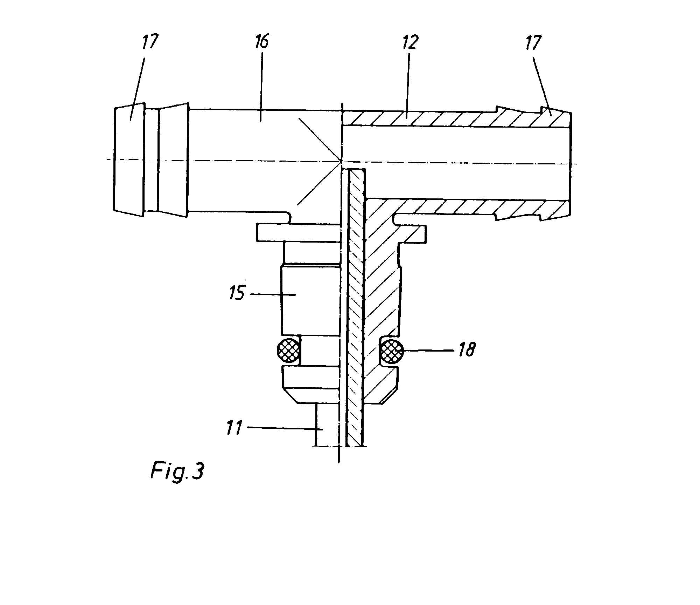

Die Akkumulatorenzelle ist mit einer Elektrolytumwälzeinrichtung (Fig. 3) ausgerüstet, die im wesentlichen aus einem Luftleitrohr 11 und einem T-Rohr 12 besteht. Das Luftleitrohr 11 ist ein flexibles, jedoch formstabiles Kunststoffteil, z. B. aus Polyethylen und hat eine bis in das untere Drittel des Zellengefäßes 1 reichende Länge sowie einen Außendurchmesser von kleiner als 3,5 mm und einen lichten Querschnitt von etwa 0,8 bis 1,0 mm. Der Außendurchmesser muß so klein sein, daß das Luftleitrohr 11 zwischen den bei normalem Zellenaufbau zwischen den Rand der positiven oder negativen Elektrodenplatten 2,3 und der Stirnwand 13 des Zellengefäßes 1 üblicherweise vorhandenen Zwischenraum 14 einschiebbar bzw. einsteckbar ist. Wenngleich der Zwischenraum 14 je nach der Zellentype bzw. -größe unterschiedlich sein kann, liegt er in der Regel unter 3,5 mm. Ein Luftleitrohr 11 mit einem Außendurchmesser von 3,0 mm und einem lichten Querschnitt von 1,0 mm hat sich als besonders geeignet erwiesen.

Das der Elektrolytumwälzeinrichtung (Fig. 3) zugehörige T-Rohr 12 besteht aus einem harten Polyethylen, das sich in einer Spritzform um das obere Ende des Luftleitrohres 11 herum spritzen läßt, so daß dieses luftdicht in den querverlaufenden Schenkel 15 des T-Rohres 12 eingebettet ist. Die beiden in einer Achse verlaufenden Schenkel 16 des T-Rohres 12 sind mit Schlauchanschlüssen 17 versehen. Der das obere Ende des Luftleitrohres 11 einfassende Schenkel 15 ist mit einem Dichtungsring 18 ausgestattet, der gegenüber dem Rohrstutzen 8 des Zellendeckels 5 eine luftdichte Abdichtung herbeiführt.

Zur Anbringung der Elektrolytumwälzeinrichtung wird diese mit dem Luftleitrohr 11 durch eine Diagnoseöffnung 7 des die Zelle verschließenden Zellendeckels 5 gesteckt. Sodann wird das Luftleitrohr 11 von oben in den Zwischenraum 14 geschoben und schließlich durch Einpressen von Schenkeln 15 in den Rohrstutzen 8 im Deckel 5 befestigt.

Wie in Fig. 1 angedeutet ist, kann die Elektrolytumwälzeinrichtung wahlweise in die + oder - seitige Diagnoseöffnung 7 des Zellendeckels 5 eingesteckt werden. Fig. 1 zeigt ferner, daß die Luft über den zentral angeordneten Stopfen 10 entweichen kann.

### Bezugszeichenliste

1 Zellengefäß
2 positive Elektrodenplatten
3 negative Elektrodenplatten
4 Plattensatz
5 Zellendeckel
6 Polanschlüsse
7 Diagnoseöffnungen
8 Rohrstutzen
9 Plättchen
10 Stopfen
11 Luftleitrohr
12 T-Rohr
13 Stirnwand
14 Zwischenraum
15 querverlaufende Schenkel von 12
16 Schenkel
17 Schlauchanschlüsse
18 Dichtungsring

## Patentansprüche

1. Verwendung einer Elektrolytumwälzeinrichtung für Bleiakkumulatorenzellen, deren Zellendeckel (5) einen zentral angeordneten Entlüftungsstopfen (10) und Diagnoseöffnungen (7) aufweist, an welche sich jeweils ein nach innen ragender Rohrstutzen (8) anschließt und die bei normalem Aufbau zwischen der Gefäßwand und dem Rand der Elektroden (2,3) üblicherweise einen Zwischenraum (14) aufweist, wobei die Elektrolytumwälzeinrichtung ein aus einem flexiblen und formstabilen Kunststoff bestehendes Luftleitrohr (11) aufweist, dessen Außendurchmesser so klein ist, daß es in den üblicherweise vorhandenen Zwischenraum (14) einsteckbar ist und das eine bis in das untere Drittel des Zellengefäßes (1) ragende Länge hat und das mit seinem oberen Ende in den Schenkel (15) eines T-Rohres (12) bei dessen Fertigung im Spritzgießoder Spritzpreßverfahren luftdicht eingebettet ist, wobei der mit dem Luftleitrohr (11) verbundene Schenkel (15) des T-Rohres (12) abdichtend in den Rohrstutzen (8) einer Diagnoseöffnung (7) eingesteckt ist, während die beiden anderen Schenkel (16) Schlauchanschlüsse (17) für den Anschluß an eine Druckluftleitung bilden.

2. Bleiakkumulator mit einer Elektrolytumwälzeinrichtung dessen Zellendeckel (5) einen zentral angeordneten Entluftungstopfen (10), und Diagnoseöffnungen (7) aufweist, an welche sich jeweils ein nach innen ragender Rohrstutzen (8) anschließt und der bei normalem Aufbau zwischen der Gefäßwand und dem Rand der Elektroden (2,3) üblicherweise einen Zwischenraum (14) aufweist, und wobei die Elektrolytumwälzeinrichtung ein aus einem flexiblen und formstabilen Kunststoff bestehendes Luftleitrohr (11) aufweist, dessen Außendurchmesser so klein ist, daß es in den üblicherweise vohandenen Zwischenraum (14) einsteckbar ist und das eine bis in das untere Drittel des Zellengefäßes (1) ragende Länge hat und das mit seinem oberen Ende in den Schenkel (15) eines T-Rohres (12) bei dessen Fertigung im Spritzgieß- oder Spritzpreßverfahren luftdicht eingebettet ist wobei der mit dem Luftleitrohr (11) verbundene Schenkel (15) des T-Rohres (12) abdichtend in den Rohrstutzen (8) einer Diagnoseöffnung (7) eingesteckt ist, während die beiden anderen Schenkel (16) Schlauchanschlüsse (17) für den Anschluß an eine Druckluftleitung bilden.

3. Verwendnung einer Elektrolytumwälzeinrichtung nach Anspruch 1, bei der das Luftleitrohr (11) einen Außendurchmesser kleiner als 3,5 mm hat.

4. Verwendung eine Elektrolytumwälzeinrichtung nach Anspruch 1 oder 3, dadurch gekennzeichnet, daß der lichte Querschnitt des Luftleitrohres (11) etwa 0,8 bis 1,0 mm beträgt.

5. Verwendung eine Elektrolytumwälzeinrichtung nach einem der Ansprüche 1, 3 oder 4, dadurch gekennzeichnet, daß der Schenkel (15) des T-Rohres (12) mittels eines Dichtungsringes (18) abdichtend wahlweise in eine der vorhandenen Diagnoseöffnungen (7) des Zellendeckels (5) steckbar ist.

6. Bleiakkumulator nach Anspruch 2, dadurch gekennzeichnet, daß das Luftleitrohr (11) einen Außendurchmesser kleiner als 3,5 mm hat.

7. Bleiakkumulator nach Anspruch 2 oder 6, dadurch gekennzeichnet, daß der lichte Querschnitt des Luftleitrohres (11) etwa 0,8 bis 1,0 mm beträgt.

8. Bleiakkumulator nach Anspruch 2, 6 oder 7, dadurch gekennzeichnet, daß der Schenkel (15) des T-Rohres (12) mittels eines Dichtungsringes (18) abdichtend wahlweise in eine der vorhandenen Diagnoseöffnungen (7) des Zellendeckels (5) steckbar ist.

## Claims

1. Use of an electrolyte circulating device for lead-acid accumulator cells whose cell cover (5) comprises a centrally disposed vent stopper (10) and inspection openings (7) adjoined by a respective inward projecting socket (8) and which, in the case of a standard construction, usually comprise an interspace (14) between the container wall and the edge of the electrodes (2, 3), the electrolyte circulating device comprising an air guide pipe (11) which consists of a flexible and dimensionally stable plastic, the outside diameter of which is so small that it can be inserted in the interspace (14) which usually exists, is of a length which extends into the lower third of the cell container (1) and is embedded in an airtight manner by way of its upper end in the branch (15) of the T-pipe (12) when the latter is produced in an injection moulding or transfer moulding process, and the branch (15) of the T-pipe (12) which is connected to the air guide pipe (11) being inserted in a sealing manner in the socket (8) of an inspection opening (7), while the two other branches (16) form flexible tube connections (17) for connection to a compressed-air line.

2. Lead-acid accumulator with an electrolyte circulating device, the cell cover (5) of which accumulator comprises a centrally disposed vent stopper (10) and inspection openings (7) adjoined by a respective inward projecting socket (8) and which, in the case of a standard construction, usually comprises an interspace (14) between the container wall and the edge of the electrodes (2, 3), the electrolyte circulating device comprising an air guide pipe (11) which consists of a flexible and dimensionally stable plastic, the outside diameter of which is so small that it can be inserted in the interspace (14) which usually exists, is of a length which extends into the lower third of the cell container (1) and is embedded in an airtight manner by way of its upper end in the branch (15) of a T-pipe (12) when the latter is produced in an injection moulding or transfer moulding process, and the branch (15) of the T-pipe (12) which is connected to the air guide pipe (11) being inserted in a sealing manner in the socket (8) of an inspection opening (7), while the two other branches (16) form flexible tube connections (17) for connection to a compressed-air line.

3. Use of an electrolyte circulating device according to claim 1, in which the outside diameter of the air guide pipe (11) is less than 3.5 mm.

4. Use of an electrolyte circulating device according to claim 1 or 3, characterised in that the clear cross section of the air guide pipe (11) is approximately 0.8 to 1.0 mm.

5. Use of an electrolyte circulating device according to one of claims 1, 3 and 4, characterised in that the branch (15) of the T-pipe (12) can be inserted in a sealing manner in any of the inspection openings (7) in the cell cover (5) by means of a sealing ring (18).

6. Lead-acid accumulator according to claim 2, characterised in that the outside diameter of the air guide pipe (11) is less than 3.5 mm.

7. Lead-acid accumulator according to claim 2 or 6, characterised in that the clear cross section of the air guide pipe (11) is approximately 0.8 to 1.0 mm.

8. Lead-acid accumulator according to claim 2, 6 or 7, characterised in that the branch (15) of the T-pipe (12) can be inserted in any of the inspection openings (7) in the cell cover (5) by means of a sealing ring (18).

## Revendications

1. Utilisation d'un dispositif de recirculation d'électrolyte pour des éléments d'accumulateur au plomb dont le couvercle (5) d'élément comporte un pot (10) de mise à l'atmosphère disposé de manière centrée et des orifices (7) de diagnostic auxquels se raccordent respectivement une tubulure (8) faisant saillie à l'intérieur et qui présente, dans une structure normale, habituellement un intervalle (14) entre la paroi du bac et le bord des électrodes (2, 3), le dispositif de recirculation d'électrolyte comportant un tuyau (11) pour de l'air en une matière plastique flexible et de forme stable, dont le diamètre extérieur est si petit qu'il peut être enfilé dans l'intervalle (14) habituellement présent et qui a une longueur allant jusqu'au tiers inférieur du bac (1) de l'élément et qui est incorporé d'une manière étanche à l'air lors de sa fabrication par un procédé de moulage par injection ou par transfert par son extrémité supérieure dans la branche (15) d'un tube (12) en T, la branche (15) du tube (12) en T reliée au tuyau (11) pour de l'air étant enfilée d'une manière étanche dans la tubulure (8) d'un orifice (7) de diagnostic, tandis que les deux autres branches (16) forment des raccords (17) de tuyaux souples pour le raccordement à un conduit pour de l'air comprimé.

2. Accumulateur au plomb, qui a un dispositif de recirculation d'électrolyte et dont le couvercle (5) d'élément comporte un pot (10) de mise à l'atmosphère disposé de manière centré et des orifices (7) de diagnostic auquel se raccordent respectivement des tubules (8) pénétrant à l'intérieur et qui presente, en structure normale, habituellement un intervalle (14) entre la paroi du bac et le bord des électrodes (2, 3), et dans lequel le dispositif de recirculation d'électrolyte comporte un tuyau (11) pour de l'air en une matière plastique flexible et de forme stable, dont le diamètre extérieur est si petit qu'il peut être enfilé dans l'intervalle (14) habituellement présent et qui a une longueur allant jusqu'au tiers inférieur du bac (1) de l'élément, et qui est incorporé d'une manière étanche à l'air lors de sa fabrication par un procédé de moulage par injection ou par transfert par son extrémité supérieure dans la branche (15) d'un tube (12) en T, la branche (15) du tube (12) en T reliée au tuyau (11) pour de l'air étant enfilée d'une manière étanche dans la tubulure (8) d'un orifice (7) de diagnostic, tandis que les deux autres branches (16) forment des raccords (17) de tuyaux souples pour le raccordement à un conduit pour de l'air comprimé.

3. Utilisation d'un dispositif de recirculation d'électrolyte suivant la revendication 1, dans laquelle le tuyau (11) pour de l'air a un diamètre extérieur inférieur à 3,5 mm.

4. Utilisation d'un dispositif de recirculation d'électrolyte suivant la revendication 1 ou 3, caractérisée en ce que la section transversale du tuyau (11) pour de l'air est comprise entre 0,8 et 1,0 mm environ.

5. Utilisation d'un dispositif de recirculation d'électrolyte suivant l'une des revendications 1, 3 ou 4, caractérisée en ce que la branche (15) du tube (12) en T peut être enfilée au moyen d'une bague (18) d'étanchéité de manière étanche au choix dans l'un des orifices (7) de diagnostic présents du couvercle (5) d'élément.

6. Accumulateur au plomb suivant la revendication 2, caractérisé en ce que le tuyau (11) pour de l'air a un diamètre extérieur inférieur à 3,5 mm.

7. Accumulateur au plomb suivant la revendication 2 ou 6, caractérisé en ce que la section transversale du tuyau (11) pour de l'air est comprise entre 0,8 et 1,0 mm environ.

8. Accumulateur au plomb suivant la revendication 2, 6 ou 7, caractérisé en ce que la branche (15) du tube (12) en T peut être enfilée au moyen d'une bague (18) d'étanchéité de manière étanche au choix dans l'un des orifices (7) de diagnostic présents du couvercle (5) d'élément.
